# EUROPEAN PATENT APPLICATION

(11) **EP 4 797 021 A1**
(43) Date of publication of application: **26.08.2026**
(21) Application number: 25159182.2
(22) Date of filing: 20.02.2025
(51) Int. Cl.: G05B 23/02, G06Q 10/00, G06Q 50/00

(54) **SYSTEM AND METHOD FOR ASSET IDENTIFICATION AND MODELING AND ASSET ANOMALY DETECTION**

(71) Applicant: Yara International ASA, 0277 Oslo (NO)
(72) Inventor: Vithanage, Madava Dilshan, 0277 Oslo (NO); Shet, Rohan, 0277 Oslo (NO); Biedermann, Dustin, 12047 Berlin (DE)
(74) Representative: AWA Sweden AB

(57) **Abstract**

A computer-implemented method for asset identification and modeling, the method comprising:
- receiving asset information data and asset operating data;
- defining operating states of the asset and identifying faulty periods of the asset based on the received asset information and asset operating data;
- selecting non-anomalous operating data of the asset;
- training at least one model configured to detect asset anomalies based on the selected non-anomalous operating data;
- validating the at least one model;
- determining an asset anomaly based on the asset current operating data and on at least one of the validated at least one models.

## Description

### Technical field

The present disclosure relates to a method and system for asset model scaling and asset anomaly detection in large-scale industrial plants, large machinery and/or equipment. The present disclosure can be applied for the maintenance and/or supervision of chemical, oil, pharmaceutical industrial production plants.

### Background

In large industrial plants, large machinery elements and mechanical equipment, monitoring and assessing asset anomalies is a cumbersome process. Due to the vast number of subsystems present in industrial plants, these subsystems comprising several assets comprising numerous mechanical, hydraulic or electric/electronic elements, it is cumbersome to identify, model and surveille these assets and evaluate alerts signaling possible asset anomalies that may be present. This leads to further issues down the road, since handling said alerts manually or without a systematic approach can lead to several challenges. Firstly, it may be difficult to identify critical issues promptly, hereby leaving the integrity of the asset at risk, as well as being detrimental to the security of operators and the general operation of the asset.

However, for achieving a systematic approach for anomaly identification, an automated process for asset identification and modelling must be first set up which enables a fast and reliable, fail-safe input and processing of the assets information, records history and available technical and sensor data in order to scale up the adoption of said systems. Moreover, such a process must deal with the great differences in technologies, manufacturers, technical arrangements and modifications that large scale industrial plants can comprise. Large scale industrial plants might have been built by different technology providers at once, or even built and revamped by different providers. Hence, there is no single large scale industrial plant identical to another, even within an single manufacturing company.

As such, there is a need for a system and method for asset identification and modeling and asset anomaly detection which takes these differences and variabilities into account and still allow the manufacturing companies to deploy automatically and systematically surveillance algorithms which can detect and report anomaly events within a manufacturing plant.

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

### Summary

According to a first aspect of the present disclosure, this and other objectives are achieved by a computer-implemented method for asset identification and modeling, the method comprising receiving asset information and asset operating data, the asset operating data comprising historic and current operating data; defining operating states of the asset and identifying faulty periods of the asset based on the received asset information and asset operating data; selecting non-anomalous operating data of the asset; training at least one model configured to detect asset anomalies based on the selected non-anomalous operating data; validating the at least one model; determining an asset anomaly based on the asset current operating data and on at least one of the validated at least one models.

According to a second aspect of the present disclosure, receiving asset information comprises receiving at least one of: piping and instrumentation diagram, a user input or external database information.

According to a third aspect of the present disclosure, receiving piping and instrumentation diagram information further comprises extracting user information by means of a multimodal large language model.

According to a further aspect of the present disclosure, receiving asset information comprises receiving at least one of: business systems reports, maintenance history reports or faulty periods reports.

According to a further aspect of the present disclosure, the method further comprising determining a likely cause for the determined asset anomaly based on the received asset information.

According to a further aspect of the present disclosure, the method further comprising determining a plurality of follow-up recommendations for the determined likely cause based on the received asset information.

According to a further aspect of the present disclosure, the determined likely cause and/or the plurality of follow-up recommendations are presented to a user by means of a display.

According to a further aspect of the present disclosure, validating the at least one model comprises generating artificial anomalous data for testing the model.

According to a further aspect of the present disclosure, wherein the method further comprises retraining the model.

According to a further aspect of the present disclosure, a computer-implemented method for asset anomaly identification, comprising a method for asset identification and modeling according to the previous aspects is comprised, wherein determining an asset anomaly based on the asset current operating data and on at least one of the validated at least one models comprises determining an operating data threshold value based on the validated model and determining an asset anomaly when an operating data value exceeds the operating data threshold value.

According to a further aspect of the present disclosure, the asset is part of a chemical plant or a machinery element in a chemical plant.

According to a further aspect of the present disclosure, the chemical plant is a fertiliser, synthesis gas, urea, ammonium nitrate, nitric acid or ammonia plant.

According to further aspects, a system, a data processing apparatus, a computer-readable storage medium, and a computer program product configured to carry out the above discussed methods are envisaged within the present disclosure.

### Brief description of the drawings

The accompanying drawings, which are included to provide a further understanding of the present disclosure and are incorporated in and constitute a part of this specification, illustrate embodiments of the disclosure and together with the description serve to explain the principles of the disclosure.
Figure 1 shows a schematic representation of a system according to an embodiment of the present disclosure.
Figure 2 shows a schematic representation of a plurality of industrial assets.
Figure 3 shows a schematic workflow of the method according to the main embodiment of the present disclosure.
Figure 4 shows a simplified schematic process flow diagram of a conventional nitric acid production plant.
Figure 5 shows a simplified schematic process flow diagram of a conventional plant for catalytic oxidation of ammonia gas.

### Detailed Description

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

Unless defined otherwise, all terms present in the current disclosure, including technical and scientific terms, have the meaning which a person skilled in the art usually gives them. For further guidance, definitions are included to further explain terms which are used in the description of the disclosure.

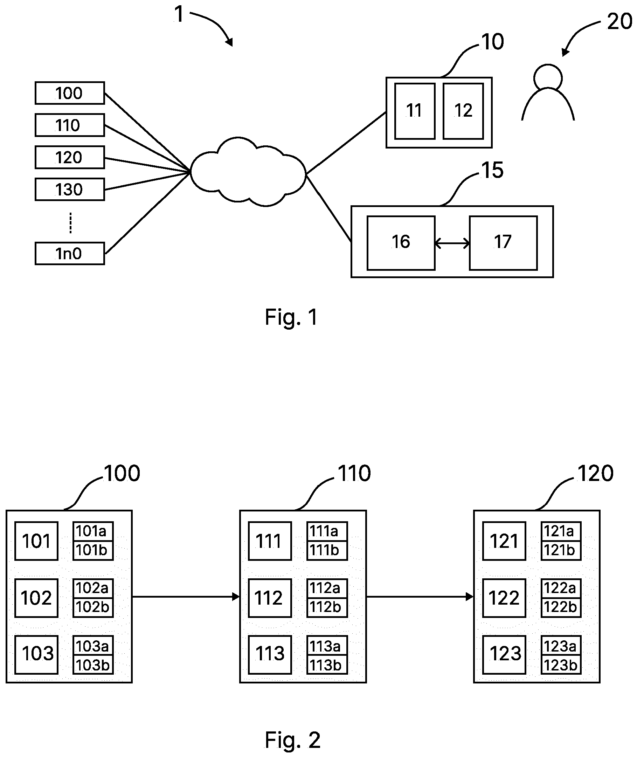

Figure 1 shows a schematic representation of a system according to an embodiment of the current disclosure. Figure 1 shows a system 1 comprising a plurality of assets (100, 110, ..., 1n0), a terminal unit 10 and a processing unit 15. Processing unit 15 comprises a processor 16 and a memory unit 17. Terminal unit 10 comprises an output unit 11, wherein the output unit may be in the form of a display. Terminal unit 10 may further comprise an input unit 12 for a user 20. In an advantageous embodiment, output unit 11 and input unit 12 may be combined in the form of a touchscreen, allowing the terminal unit to be a portable device hereby enabling the user 20 to take action swiftly upon processing of alerts, and being operably connected to processing unit 15. However, this example is not considered to be limiting; the terminal unit 10 and processing unit 15 may, for instance, be integrated in a single device, such as a mobile device or a desktop device. Further, terminal unit 10 and processing unit 15 are operably connected, by means of wired or wireless connections, to the plurality of assets 100, 110, ..., 1n0, which will be described together with Figure 2 below. Alternatively, the processing unit 15 may be part of a distributed industrial controller setting, comprising at least one microprocessor and at least one memory unit for the independent operation of the different assets. According to different embodiments, operational data from the plurality of assets may be delivered to the processing unit 15 in real-time or after storage in memory unit 17. Hence, the processing unit is configured to process the operational data as described below and to determine the different steps as disclosed by the method of the present disclosure.

Figure 2 shows a schematic representation of a plurality of assets 100, 110, 120, according to the definition of the present disclosure. The plurality of assets may, for instance, form a part of an industrial plant, such as a chemical plant. Asset 100 may refer to a constructional element and/or actuator, or to a plurality thereof, e.g. 101, 102, 103, ... , wherein each of these constructional elements and/or actuators may comprise at least one sensor 101a, 101b, 102a, 102b, 103a, 103b, ... . The same applies to assets 110 and 120. Asset 100 may be, e.g., a stage within the industrial plant, wherein the products of asset 100 are used in assets 110 and 120, respectively, for further chemical reactions. However, according to the present disclosure, asset 100 may alternatively be an element, like a pump or a valve, within a process stage of an industrial plant or within machinery. In this case, assets 110 and 120 may be further elements within the process stage, or within further process stages. This will be made clear with respect to the specific embodiments described further below.

Figure 1 and Figure 2 refer to the disclosure of patent application EP24213258.7, which is herewith incorporated for reference. The patent application EP24213258.7 discloses a method for anomaly detection and sorting method which is improved by the method of the current disclosure. Further, system 1 of the current disclosure may comprise access to internal databases of the industrial or manufacturing plants comprising asset information. Asset information may be retrieved from internal databases comprising piping and instrumentation diagrams, or in case of some commercially available machinery parts or assets (e.g. a compressor from a known manufacturer) from external databases over the internet, or in cases when the machinery parts or assets have been customized, mounted or built in-house, by means of user input through input unit 12.

A Piping and Instrumentation Diagram is a detailed schematic used in the process industry to illustrate the interconnection of process equipment and the instrumentation used to control the process and serves as a critical tool in the design, operation, and maintenance of process systems. A piping and instrumentation diagram may comprise technical drawings and information of the machinery or chemical plant comprising process equipment (e.g. pressure vessels, columns, tanks, pumps, compressors, heat exchangers, reactors, furnaces, ...), piping (e.g. connections showing the flow of materials through the system, including pipe sizes, classes, and identification numbers), electrical wirings (e.g. cables carrying out control and/or sensing signals), instrumentation (e.g. control devices such as sensors, transmitters, controllers, and indicators), valves (e.g. various types of valves, e.g. isolation, shutoff, relief and so on and their identification). Piping and instrumentation diagrams may comprise databases up to date of the current status of the chemical plant in the best cases with indexed fields and standardized nomenclature of the plant's elements, or may comprise scanned documents without any further information.

As such, according to a further embodiment, receiving piping and instrumentation diagram information may comprise extracting asset information by means of a multimodal large language model (MLLM). A multimodal large language model is an advanced artificial intelligence system designed to process and understand multiple types of data modalities, such as text, images, audio, and video.

A multimodal large language model according to the current disclosure may comprise Optical Character Recognition (OCR) capabilities, hereby allowing that the large language model can also handle inputs like drawings and handwritten text, converting them into digital formats that can be further processed or translated into coding languages. Further, the MLLM may further comprise a Multimodal Encoder configured to process further inputs of different modalities. For instance, it can take in images of drawings or handwritten text and convert them into a format that the model can understand. Further, the MLLM may further comprise an Input Modal Aligner configured to align the different types of input data into a unified representation that can be processed by the MLLM. This ensures that the MLLM can handle and interpret the data consistently. Further, the MLLM may comprise a Pretrained MLLM Backbone. Said backbone, typically a large language model like GPT-4, which has been pretrained on vast amounts of text data, is responsible for understanding and generating text based on the processed inputs.

Hence, such a MLLM may be configured to receive different modes of input information, hereby being able of processing the different inputs which can be present in piping and instrumentation diagrams, manually uploaded documents or booklets of the asset's manufacturers. Hence, based on a specific input, the MLLM may be configured to receive an image of a handwritten note or a drawing, wherein the OCR component is configured to scan the image and converts the handwritten text or drawing into a digital format, wherein the multimodal encoder processes the digital text or drawing and aligns it with other input data types to then let the pretrained MLLM backbone interpret the aligned data, understanding the context and content. Based on the output of the MLLM, the method of the current disclosure can generate.

Further, system 1 may be further configured to receive business system reports, maintenance history reports or faulty periods reports by means of internal networks present in the chemical or industrial plant. Usually, large-scale manufacturing plants may comprise internal databases (like SAP or other Enterprise Resource Planning, ERP, software). These databases integrate business processes, enabling companies to manage production planning, scheduling, operations, and compliance efficiently. As such, any further information that there might be available on the assets should be registered in said business systems reports, hereby comprising information to known faults of the assets, likely cause of failure and/or possible follow-up recommendations of actions to repair the assets or other recommendations to avoid specific actions. As above, the method of the current disclosure comprises using a MLLM to parse and extract the information present in business systems reports.

According to a further embodiment, the MLLM configured to extract information from the piping and instrumentation diagram may be different from the MLLM configured to extract information from the business system reports, hereby using to the maximum of capabilities the specific language similarities in each of the databases.

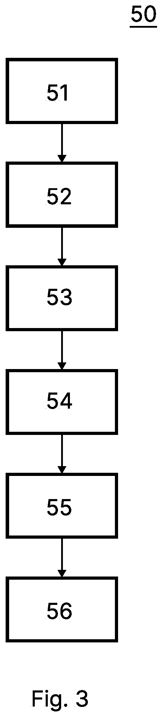

Figure 3 shows a schematic workflow of the methods according to the main embodiment of the current disclosure which will be explained next.

The method of the current disclosure comprises receiving asset information data and asset operating data, the asset operating data comprising historic and current operating data. Asset information data may comprise asset manufacturing data, asset product data, asset operating ranges data, asset operating time data, asset modification data and any other information customary to the asset way of operating and how it has been operated before. Asset operating or operational data may comprise historic and current operational data collected from at least one sensor coupled to the industrial asset.

Further, the method of the current disclosure comprises defining operating states of the asset and identifying faulty periods of the asset based on the received asset information and asset operating data. Further, the method of the current disclosure selects non-anomalous operating data of the asset, once the faulty periods of the asset have been isolated, to train at least one model configured to detect asset anomalies based on said selected non-anomalous operating data.

According to the current disclosure, a model may be a set of mathematical equations based on physical principles and adapted and trained to suit the specific assets or may be a purely machine learning generated model generated through training over the asset operating data together with specific assumptions and boundary conditions as can be derived from the asset information data. According to the current disclosure, training a model can therefore mean adapting specific parameters which resemble physical parameters or the definition of the model per se. Hence, the method of the current disclosure may comprise defining the model, physical equations when based on a mathematical model, or the architecture of the machine learning model. This may include selecting the type of model (e.g., neural network, decision tree, support vector machine), the number of layers (in the case of neural networks), the type of layers (e.g., convolutional, recurrent, fully connected), and so on. The model architecture may therefore be defined based on the specific application and the nature of the data.

Training a machine learning model may further comprise tuning hyperparameters, wherein hyperparameters are parameters that are not learned during the training process but are set prior to training. The method includes tuning hyperparameters such as learning rate, batch size, number of epochs, regularization parameters (e.g., L1, L2), and dropout rate. Hyperparameter tuning can be performed using techniques such as grid search, random search, or Bayesian optimization. The goal is to find the optimal set of hyperparameters that maximize the model's performance on a validation dataset. Further, once the model architecture and hyperparameters are defined, the model is trained using a training dataset. The training process involves feeding the asset operating data into the model, calculating the loss of a specific cost function (e.g., mean squared error, cross-entropy), and updating the model parameters using optimization algorithms. The training process may be repeated for a specified number of iterations or until the model converges.

The method of the current disclosure comprises training at least one model according to the above discussed methods. In order to improve the model description of specific assets, a plurality of models may be trained to then be validated such that the best suitable model may be picked. According to the current disclosure, validating the model may comprise, after training, validating using a separate validation dataset. The validation process may involve evaluating the model's performance on the validation data and calculating metrics such as accuracy, precision, recall, F1 score, or mean absolute error. The validation results are used to assess the model's generalization ability and to detect overfitting.

According to a further embodiment, validating the at least one model comprises generating artificial anomalous data for testing the model. While training data generated on the asset information and asset operating data may comprise causal relations between inputs and outputs (e.g. opening a valve letting a hot liquid enter the vessel may lead to a rise in temperature), artificial anomalous data comprises generating data which does not represent the causal or physical laws present in the specific assets, hereby testing that the model detects the anomalies within the inherent functioning of the specific asset.

According to a further embodiment, the method further includes performing cross-validation, where the training and validation process is repeated multiple times with different splits of the data to ensure robustness. In another embodiment, the method includes using ensemble techniques, where multiple models are trained and their predictions are combined to improve performance. In yet another embodiment, the method includes using transfer learning, where a pre-trained model is fine-tuned on a new dataset to leverage existing knowledge.

The system for training and validating the machine learning may be system 1 or may be a separated computing device, wherein the computing device may comprise a separate processor, memory, and storage from the one described above. The computing device is configured to execute machine learning frameworks as customary in the art and to perform the steps of defining the model architecture, tuning hyperparameters, training the model, and validating the model as defined above.

According to a further embodiment, once an asset has been identified and modeled according to any of the embodiments described above, the method of the current disclosure further comprises determining an asset anomaly, wherein asset operating data comprises current operating data and determining an asset anomaly based on the asset current operating data and on at least one of the validated at least one models comprises determining an operating data threshold value based on the validated model and determining an asset anomaly when an operating data value exceeds the operating data threshold value.

According to a further embodiment, the method further comprises retraining the model. According to the further disclosure, retraining the model may happen automatically after a specific time or upon redeployment of a specific asset or after the method of the current disclosure has raised an anomaly event which was then judged not to be by a human or expert knowledge.

According to a further embodiment, the industrial asset may be part of mechanical equipment, a machinery element or a chemical plant.

According to a further embodiment, the chemical plant is a fertilizer, synthesis gas, urea, ammonium nitrate, nitric acid or ammonia plant.

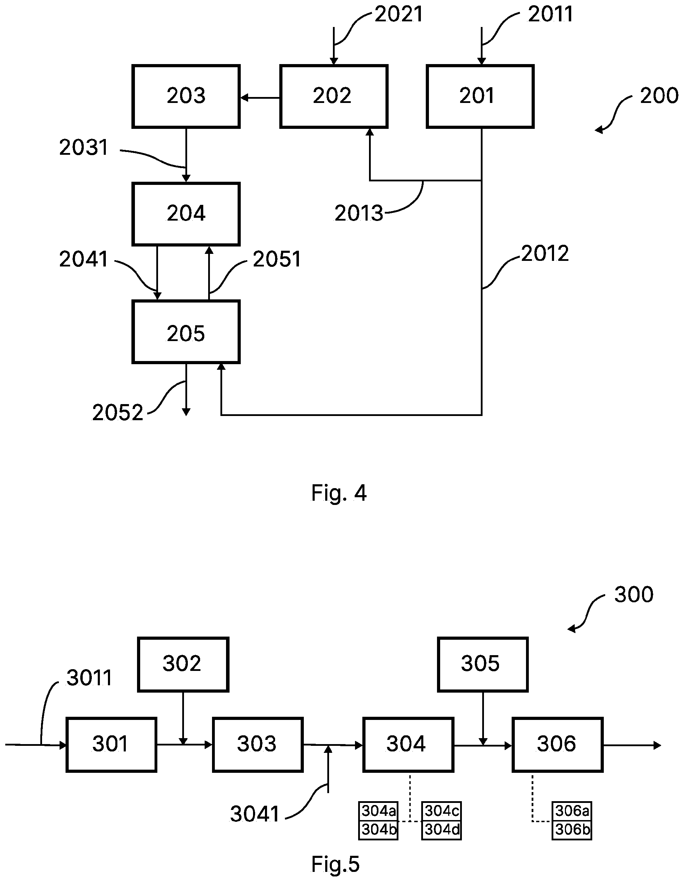

For example, Figure 4 shows a simplified schematic process flow diagram of a conventional nitric acid production plant 200, using air as the stripping gas. Ammonia is fed 2021 to an ammonia converter 202. Air is fed 2011 to a compressor 201. The compressed air from the air compressor is split into a first 2012 and a second 2013 air flow. The first air flow is fed 2012 as primary air to the ammonia converter 202, and the second air flow is fed 2013 as secondary air to the bleaching tower 205. Ammonia is oxidized to NO in the ammonia converter 202. The NO is fed to the cooler/condenser 203. In the cooler/condenser 203, the NO reacts with excess oxygen to form NO₂ and then the NO₂ reacts to form N₂O₄. The NO₂ and N₂O₄ are fed 2031 to the absorption tower 204, where they are converted to nitric acid and an aqueous nitric acid solution is formed. The aqueous nitric acid solution is fed 2041 to the bleaching tower 205, where dissolved nitrogen oxides are removed from the aqueous nitric acid solution by contacting the aqueous nitric acid solution with air provided by compressor 201. The nitrogen oxides removed from the aqueous nitric acid solution in the bleaching tower 205 are fed back 2051 from the bleaching tower 205 to the absorption tower 204 or optionally further up in the upstream process to be converted to nitric acid. Aqueous nitric acid solution from which the nitrogen oxides have been removed (i.e. bleached) leaves 2052 the bottom of the bleaching tower 205 as final aqueous nitric acid solution product.

Following the application of a method of the current disclosure to the nitric acid production plant 200 as represented in Figure 4, the compressor 201, the ammonia converter 202, the cooler/condenser 203, the absorption tower 204, and the bleaching tower 205 may each be defined as one asset (100, 110, ...) pertaining to the nitric acid production plant 200. Each of the defined assets may comprise a plurality of sensors measuring at least one variable or parameter of the industrial asset, hereby defining the plurality of sensors as described above. For example, compressor 201 may comprise a plurality of sensors at the inlet and outlet, hereby comprising temperature, pressure, flowmeter and other equivalent sensors at the inlet, outlet or in between stages of compression.

Following the method of the current disclosure, system 1 is configured to receive asset information and asset operating data in order to train the at least one model.

Figure 5 shows a simplified schematic process flow diagram of a conventional plant for catalytic oxidation of ammonia gas which can be used for nitric acid production. In the diagram, air 3011 is fed to a compressor 301 and ammonia is fed 3041 further downstream to a conduit going through an indirect heat exchanger 304. Compressed air released from compressor 301 is introduced into heat exchanger 303 together with fuel gas introduced by pump 302. After the addition of ammonia gas 3041, the gas mixture flows via the indirect heat exchanger 304 into ammonia burner 306, together with further fuel gas introduced by pump 305. Each of the elements depicted in Figure 5 can be defined as one asset according to the method of the current disclosure. For example, indirect heat exchanger 304 may comprise inlet and outlet pressure sensor 304a and 304b, inlet and outlet temperature sensors 304c and 305d. Further, ammonia burner 306 may comprise a plurality of temperature sensors 306a, 306b, ... However, following the definitions according to the current disclosure, a flow valve within the indirect heat exchanger may be seen as an asset itself. Different actuators regulating the valve opening degree, or sensors within it or around may be seen as the respective sensors comprised by the asset. As such, it is clear from the description of these two specific applications that usual chemical plants and other production sites comprise a vast amount of assets comprising each of them an even bigger number of sensors receiving data from each of the asset's elements.

While the present disclosure has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The disclosure in its broader aspects is therefore not limited to the specific details, representative apparatus and method, and illustrative example shown and described. Accordingly, the detailed description thereof should not be construed as restrictive in all aspects but considered as illustrative. The scope of the disclosure should be determined by reasonable interpretation of the appended claims and changes that come within the equivalent scope as included in the scope of the current disclosure.

The process steps, method steps, algorithms or the like may be described in a sequential order, such processes, methods and algorithms may be configured to work in alternate orders. In other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product. While the foregoing describes various embodiments of the disclosure, other and further embodiments of the disclosure may be devised without departing from the basic scope thereof. The scope of the disclosure is determined by the claims that follow. The disclosure is not limited to the described embodiments, versions or examples, which are included to enable a person having ordinary skill in the art to make and use the disclosure when combined with information and knowledge available to the person having ordinary skill in the art.

## Claims

1. A computer-implemented method (50) for asset identification and modeling, the method comprising:
- receiving (51) asset information data and asset operating data;
- defining (52) operating states of the asset and identifying faulty periods of the asset based on the received asset information and asset operating data;
- selecting (53) non-anomalous operating data of the asset;
- training (54) at least one model configured to detect asset anomalies based on the selected non-anomalous operating data;
- validating (55) the at least one model;
- determining (56) an asset anomaly based on the asset current operating data and on at least one of the validated at least one models.

2. A computer-implemented method according to claim 1, wherein receiving asset information comprises receiving at least one of: piping and instrumentation diagram, a user input or external database information.

3. A computer-implemented method according to claim 2, wherein receiving piping and instrumentation diagram information further comprises extracting asset information by means of a multimodal large language model.

4. A computer-implemented method according to any one of the preceding claims, wherein receiving asset information comprises receiving at least one of: business systems reports, maintenance history reports or faulty periods reports.

5. A computer-implemented method according to claim 4, wherein the method further comprises determining a likely cause for the determined asset anomaly based on the received asset information.

6. A computer-implemented method according to claim 5, wherein the method further comprises determining a plurality of follow-up recommendations for the determined likely cause based on the received asset information.

7. A computer-implemented method according to claim 5 or 6, wherein the determined likely cause and/or the plurality of follow-up recommendations are presented to a user by means of a display.

8. A computer implemented method according to any one of the preceding claims, wherein validating the at least one model comprises generating artificial anomalous data for testing the model.

9. A computer-implemented method according to any one of the preceding claims, wherein the method further comprises retraining the model.

10. A computer-implemented method for asset anomaly identification, comprising a computer-implemented method for asset identification and modeling according to any one of claims 1 to 9, wherein asset operating data comprises current operating data and determining an asset anomaly based on the asset current operating data and on at least one of the validated at least one models comprises determining an operating data threshold value based on the validated model and determining an asset anomaly when an operating data value exceeds the operating data threshold value.

11. A computer-implemented method according to any one of the preceding claims, wherein the asset is part of a chemical plant or a machinery element in a chemical plant.

12. A computer-implemented method according to claim 11, wherein the chemical plant is a fertiliser, synthesis gas, urea, ammonium nitrate, nitric acid or ammonia plant.

13. A data processing apparatus comprising means for carrying out the computer-implemented method of any one of the preceding claims.

14. A computer-readable storage medium comprising instructions which, when executed by a computer system, cause the computer to carry out the computer-implemented method of any one of the preceding claims.

15. A computer program product comprising instructions which, when the program is executed by a computer system, cause the computer to carry out the computer-implemented method of any one of the preceding the claims.
